# EUROPEAN PATENT APPLICATION

(11) **EP 2 495 130 A1**
(43) Date of publication of application: **05.09.2012**
(21) Application number: 12460006.5
(22) Date of filing: 17.02.2012
(51) Int. Cl.: B60Q 1/32, B60Q 1/46, B60Q 1/30

(54) **Outline marker lamp or park lamp**

(30) Priority: 02.03.2011 PL 11980511; 24.03.2011 PL 11986511; 24.03.2011 PL 11986611; 24.03.2011 PL 11986411
(71) Applicant: Przetworstwo Tworzyw Sztucznych Was Jozef I Leszek was, Spolka Jawna, 55-200 Olawa (PL)
(72) Inventor: Was, Jozef, 55-200 Olawa (PL); Was, Leszek, 55-200 Olawa (PL)
(74) Representative: Winohradnik, J. Halina

(57) **Abstract**

The invention relates to an outline marker lamp or a park lamp, which is designed for lighting lories and their full and semi-trailers, by front, side, rear outline marker light or a park light, and consists of a body sealed from the front end by a lens, wherein a set of electroluminescent diodes and electrical supply circuit are located.
The lamp is **characterized in that** electroluminescent diodes (3) are connected to a circuit (5) for lighting the diodes in a sequential order, where said circuit works as a power supply for the lamp, and said electroluminescent diodes (3) in the lamp body are arranged around the perimeter of an oval or tetragonal or triangular geometric figure.
Preferably, the circuit (5) for lighting the diodes in a sequential order is a circuit for cyclical lighting the diodes in a sequential order, and the diodes (3) in the lamp body (2) are evenly spaced apart.

## Description

The invention relates to an outline marker lamp or a park lamp, which is designed for lighting lories and their full and semi-trailers, by front, side, rear outline marker light or a park light.

An outline marker lamp described in a German patent No. DE 3703095 and designed for use on lories, trailers and semi-trailers, comprises a body in form of an arm, with a fixing plate at its one end and a clamping ring at the other, where a bushing closed at both ends by lamp lenses is embedded in that clamping ring. The lamp lenses are secured by screws to a protuberance in the bushing. The light source is an incandescent bulb in a bulb socket, and it is placed inside the bushing. According to this solution, one incandescent bulb makes for both the rear-end and the front-end outline marker lights.

In a lamp described in a US patent No. 6095663 and designed for use on lories and buses, light emitting diodes are utilized as light sources. A lamp according to this invention jects light in two opposite directions as well as perpendicularly to those two directions. Mounted to a side panel of a vehicle, the lamp provides a front-end outline marker light, a rear-end outline marker light and a side park light.

A vehicle lighting device described in European Patent No. EP 0689961 provides for a two-core cable, running along both longitudinal side panels of a vehicle, and side outline marker lamps are attached to the said cable by means of pointed contact pins that are piercing the cable insulation.

A combination vehicle lamp described in Polish patent application PL 374753 comprises a body formed of a base and an arm terminating in a clamping ring, where on both sides of the said clamping ring attached are lamp lenses, while the light source of a front-end outline marker light beam and the light source of a rear-end outline marker light beam are placed inside said clamping ring. As a source of a front-end outline marker light beam serves a white light emitting diode shielded by a lamp lens and mounted on a printed circuit board secured in a casing placed within the lamp body inside the clamping ring. Whereas a red light emitting diode, shielded by a lamp lens and mounted on the printed circuit board secured in a casing placed within the lamp body inside the clamping ring, serves as a source of a rear-end outline marker light beam. The diodes are connected in series.

A vehicle outline marker lamp described in a Canadian patent application No. CA 2169677 (A) comprises light emitting diodes mounted on a printed circuit board, sealed in a lightweight, hermetic casing.

The essence of the present invention constitutes an outline marker lamp or a park lamp, consisting of a body sealed from the front end by a lens, wherein electroluminescent diodes are placed and connected to a circuit for lighting the diodes in a sequential order, which circuit works as a lamp power supply. The said electroluminescent diodes in the lamp body are arranged in oval, tetragonal or triangular configurations, perimeter-wise.

Preferably, the circuit for lighting the diodes in a sequential order is a circuit for cyclical lighting the diodes in a sequential order.

Preferably, the electroluminescent diodes in the lamp body are arranged around the circumference of a circle.

Preferably, the electroluminescent diodes in the lamp body are arranged around the circumference of an ellipse.

Preferably, the electroluminescent diodes in the lamp body are arranged around the perimeter of a square.

Preferably, the electroluminescent diodes in the lamp body are arranged around the perimeter of a rectangle.

Preferably, the electroluminescent diodes in the lamp body are arranged around the perimeter of a rhombus.

Preferably, the electroluminescent diodes in the lamp body are arranged around the perimeter of a trapezoid.

Preferably, the electroluminescent diodes in the lamp body are arranged around the perimeter of a triangle.

Preferably, the diodes in the lamp body are evenly spaced apart.

Preferably, the lamp comprises nine or more electroluminescent diodes that are evenly spaced apart.

The advantage of the lamp according to the invention consists in that it is provided with a plurality of electroluminescent diodes which will sequentially light and go out, the advantage consists also in that such cycle will repeat with appropriately high frequency.

Use of sequentially lighting diodes, for example in outline marker lamps that generate cyclical beams of light, fulfils requirements for the vehicle outline marker lighting and, furthermore, affords opportunity to get a visually attractive lighting. In addition, the lamp is simple and durable, yet makes it possible to control luminance of light beams and to mark well the vehicle zones.

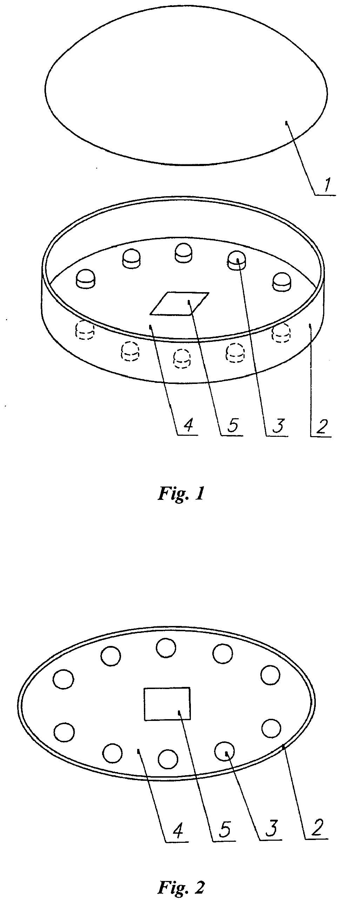

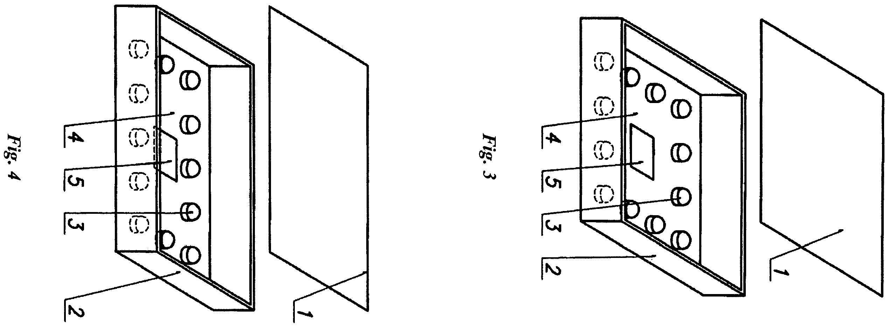

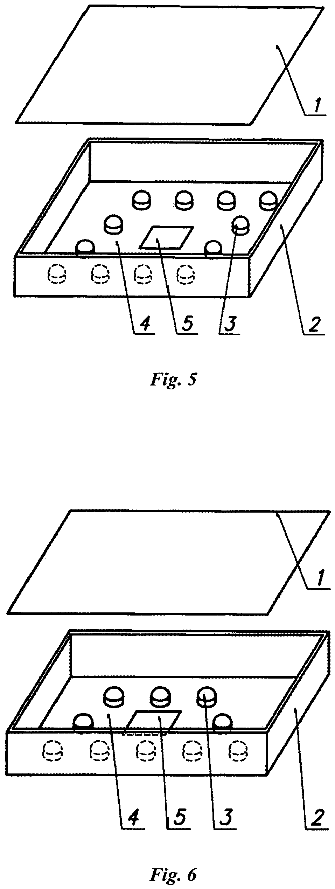

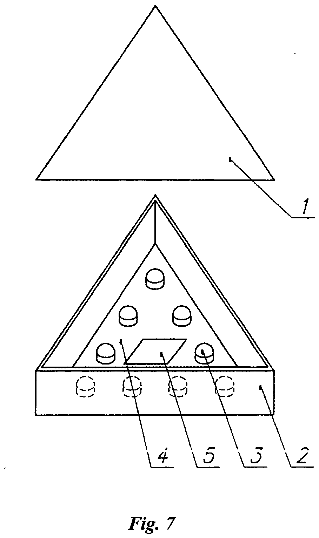

The subject-matter of the invention has been presented in drawings, where Fig. 1 presents axonometric view of a lamp where the lamp lens has been removed, with diodes arranged around the circumference of a circle; Fig. 2 presents a lamp with diodes arranged around the circumference of an ellipse, viewed from the front; Fig. 3 presents a lamp where the lamp lens has been removed, with diodes arranged around the perimeter of a square; Fig. 5 presents a lamp where the lamp lens has been removed, with diodes arranged around the perimeter of a rhombus, in the axonometric view; Fig. 6 presents a lamp where the lamp lens has been removed, with diodes arranged around the perimeter of a trapezoid, in the axonometric view; Fig. 7 presents a lamp where the lamp lens has been removed, with diodes arranged around the perimeter of a triangle, in the axonometric view.

### Example I

An outline marker lamp consists of a body 2 sealed from the front end by a lens 1, wherein ten electroluminescent diodes 3 are arranged symmetrically in a circle, mounted on a printed circuit board 4 and connected to a circuit 5 for lighting the diodes 3 in a sequential order, where said circuit works as a power supply for the diodes.

The lamp is attached to a vehicle by means of mounting holes, not shown in the drawing.

### Example II

A park lamp consists of a body 2 sealed from the front end by a lens 1, wherein ten electroluminescent diodes 3 are arranged in an ellipse, mounted on a printed circuit board 4 and connected to a circuit 5 for cyclical lighting the diodes 3 in a sequential order. Furthermore, the diodes 3 are evenly spaced apart. The lamp is attached to a vehicle by means of a mounting holder, not shown in the drawing.

### Example III

An outline marker lamp consists of a body 2 sealed from the front end by a lens 1, wherein twelve electroluminescent diodes 3 are arranged in a square and mounted on a printed circuit board 4, whereon a circuit 5 for cyclical lighting the diodes 3 in a sequential order is located.

### Example IV

An outline marker lamp consists of a body 2 sealed from the front end by a lens 1, wherein twelve electroluminescent diodes 3 are arranged in a rectangle and mounted on a printed circuit board 4, whereon a circuit 5 for lighting the diodes 3 in a sequential order is located.

### Example V

An outline marker lamp consists of a body 2 sealed from the front end by a lens 1, wherein twelve electroluminescent diodes 3 are arranged in a rhombus and mounted on a printed circuit board 4, whereon a circuit 5 for cyclical lighting the diodes 3 in a sequential order is located.

### Example VI

An outline marker lamp consists of a body 2 sealed from the front end by a lens 1, wherein ten electroluminescent diodes 3 are arranged in a trapezoid and mounted on a printed circuit board 4, whereon a circuit 5 for lighting the diodes 3 in a sequential order is located.

### Example VII

An outline marker lamp consists of a body 2 sealed from the front end by a lens 1, wherein nine electroluminescent diodes 3 are arranged in a triangle and mounted on a printed circuit board 4, whereon a circuit 5 for lighting the diodes 3 in a sequential order is located.

## Claims

1. An outline marker lamp or a park lamp, consisting of a body sealed from the front end by a lens, wherein a set of electroluminescent diodes and a power supply circuit are located, **characterized in that** electroluminescent diodes (3) are connected to a circuit (5) for lighting the diodes (3) in a sequential order, where said circuit works as a power supply for the lamp, and said electroluminescent diodes (3) in the lamp body are arranged around the perimeter of an oval or tetragonal or triangular geometric figure.

2. A lamp according to claim 1, **characterized in that** a circuit (5) for lighting the diodes in a sequential order is a circuit for cyclical lighting the diodes in a sequential order.

3. A lamp according to claim 1, **characterized in that** diodes (3) in the lamp body (2) are evenly spaced apart.

4. A lamp according to claim 1, **characterized in that** a set of electroluminescent diodes comprises at least nine electroluminescent diodes (3).

5. A lamp according to claim 1, **characterized in that** said electroluminescent diodes (3) in said lamp body (2) are arranged around the circumference of a circle.

6. A lamp according to claim 1, **characterized in that** electroluminescent diodes (3) in the lamp body (2) are arranged around the circumference of an ellipse.

7. A lamp according to claim 1 or 2, **characterized in that** electroluminescent diodes (3) in the lamp body (2) are arranged around the perimeter of a square.

8. A lamp according to claim 1, **characterized in that** electroluminescent diodes (3) in the lamp body (2) are arranged around the perimeter of a rectangle.

9. A lamp according to claim 1, **characterized in that** electroluminescent diodes (3) in the lamp body (2) are arranged around the perimeter of a rhombus.

10. A lamp according to claim 1, **characterized in that** electroluminescent diodes (3) in the lamp body (2) are arranged around the perimeter of a trapezoid.

11. A lamp according to claim 1, **characterized in that** electroluminescent diodes (3) in the lamp body (2) are arranged around the perimeter of a triangle.
